# EUROPEAN PATENT APPLICATION

(11) **EP 4 745 809 A1**
(43) Date of publication of application: **20.05.2026**
(21) Application number: 24842906.0
(22) Date of filing: 25.06.2024
(51) Int. Cl.: G06F 21/44, G06F 21/31, G06F 21/45, H04L 67/14

(54) **SYSTEM, INFORMATION TERMINAL, AND COMMUNICATION SETTING METHOD**

(30) Priority: 14.07.2023 JP 2023116305
(71) Applicant: Panasonic Intellectual Property Management Co., Ltd., Kadoma-shi, Osaka 571-0057 (JP)
(72) Inventor: ICHIMARU, Yuji, Kadoma-shi, Osaka 571-0057 (JP); NAKAMURA, Tomonori, Kadoma-shi, Osaka 571-0057 (JP); MURAKAMI, Kazuhiro, Kadoma-shi, Osaka 571-0057 (JP)
(74) Representative: Novagraaf International SA
(86) International application number: PCT/JP2024/023063
(87) International publication number: WO 2025/018111

(57) **Abstract**

In a system (1), an information terminal (10) includes: a terminal obtainer (11) that receives an authentication key from a server (20); a generator (13) that generates an optical reading code representing the authentication key; a display (15) that displays the optical reading code; a terminal storage (14) that stores user information; and a terminal transmitter (12) that transmits the user information to the server (20). A camera device (40) includes: an image sensor (41); a decoder (42) that decodes the authentication key of the optical reading code based on an image obtained by capturing the optical reading code displayed using the image sensor (41); a camera storage (43) that stores camera information; and a camera communicator (44) that transmits the authentication key and the camera information to the server (20). The server (20) stores, in association with each other: the user information transmitted by the information terminal (10); and the camera information transmitted together with the authentication key by the camera device (40).

## Description

### [Technical Field]

The present invention relates to a system, an information terminal, and a communication setting method.

### [Background Art]

Patent Literature (PTL) 1 discloses transmitting a device identifier and a user identifier to a server device and associating the identifiers to each other.

### [Citation List]

### [Patent Literature]

[PTL 1] Japanese Unexamined Patent Application Publication No. 2019-101509

### [Summary of Invention]

### [Technical Problem]

The present disclosure provides a system capable of storing user information and reliable camera information in association with each other.

### [Solution to Problem]

In a system according to an aspect of the present disclosure, a camera device having a communication function communicates via a network with a server communicably connectable to an information terminal. The information terminal includes: a terminal obtainer that receives an authentication key from the server; a generator that generates an optical reading code representing the authentication key; a display that displays the optical reading code generated; a terminal storage that stores user information for identifying a user; and a terminal transmitter that transmits the user information to the server. The camera device includes: a decoder that decodes the authentication key represented by the optical reading code, based on an image obtained by capturing the optical reading code displayed on the information terminal using an image sensor included in the camera device; a camera storage that stores camera information for identifying the camera device; and a camera communicator that transmits, to the server, the authentication key and the camera information stored in the camera storage. The server stores, in association with each other: the user information transmitted by the information terminal; and the camera information transmitted together with the authentication key by the camera device.

An information terminal according to an aspect of the present disclosure is communicably connected via a network to a server communicably connectable to a camera device having a communication function. The information terminal includes: a terminal obtainer that obtains, from the server, an authentication key for causing the server to verify that information received together with the authentication key is reliable; a generator that generates an optical reading code representing the authentication key; a display that displays the optical reading code generated by the generator so as to be read by the camera device; a terminal storage that stores user information for identifying a user; and a terminal transmitter that transmits the user information to the server.

By a communication setting method according to an aspect of the present disclosure, a camera device having a communication function communicates via a network with a server communicably connectable to an information terminal. The communication setting method includes: obtaining, by the information terminal, an authentication key from the server; generating, by the information terminal, an optical reading code representing the authentication key; displaying, by the information terminal, the optical reading code generated; transmitting, by the information terminal, user information for identifying a user to the server; capturing, by the camera device, the optical reading code displayed on the information terminal; decoding, by the camera device, the authentication key represented by the optical reading code based on an image obtained by the capturing; transmitting, by the camera device, the authentication key and camera information for identifying the camera device to the server; and storing, by the server in association with each other, the user information transmitted by the information terminal and the camera information transmitted together with the authentication key by the camera device.

Note that these general and specific aspects of the present disclosure may be implemented using a device, an integrated circuit, a computer program, or a non-transitory recording medium, such as a computer-readable compact disc read-only memory (CD-ROM), or any combination of devices, methods, systems, integrated circuits, computer programs, or non-transitory recording media.

### [Advantageous Effects of Invention]

A system, and so on, according to the present disclosure can store user information and reliable camera information in association with each other.

### [Brief Description of Drawings]

[FIG. 1]

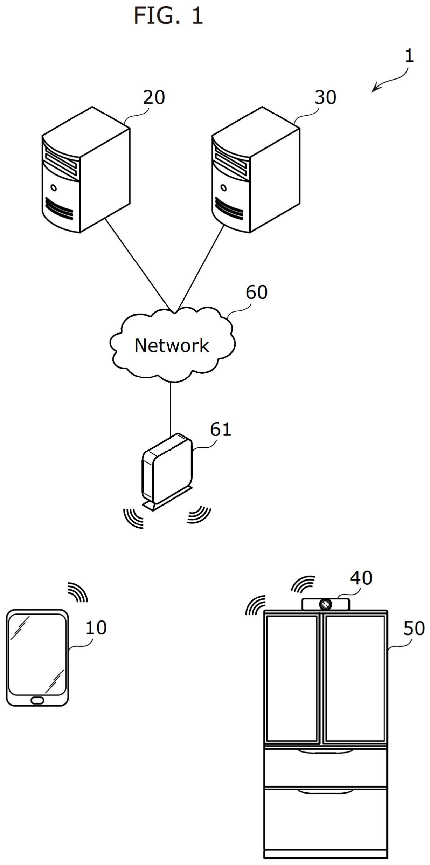

   FIG. 1 is for illustrating an outline of a system according to an embodiment.
[FIG. 2]

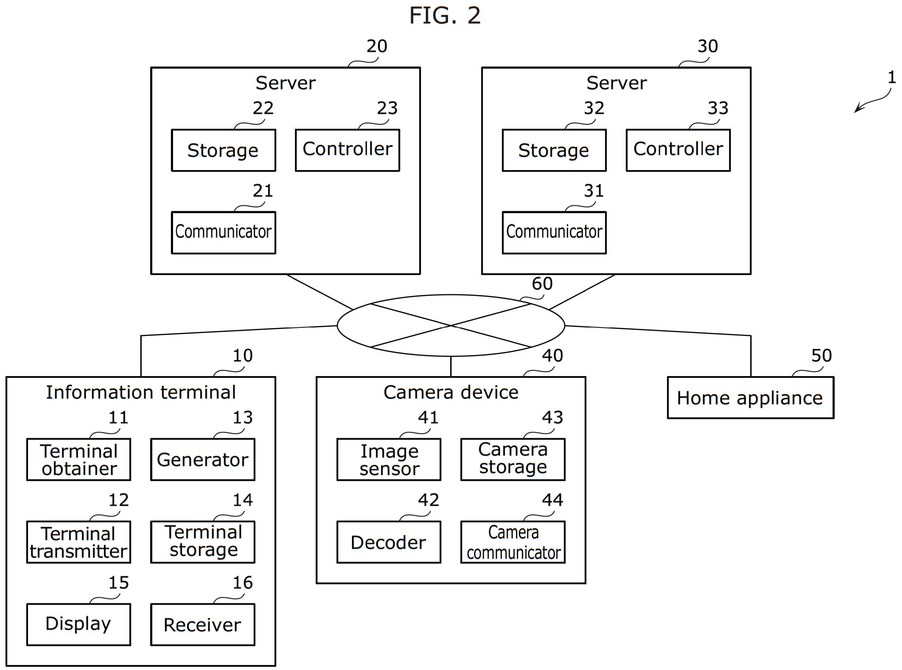

   FIG. 2 shows an example configuration of the system according to the embodiment.
[FIG. 3]

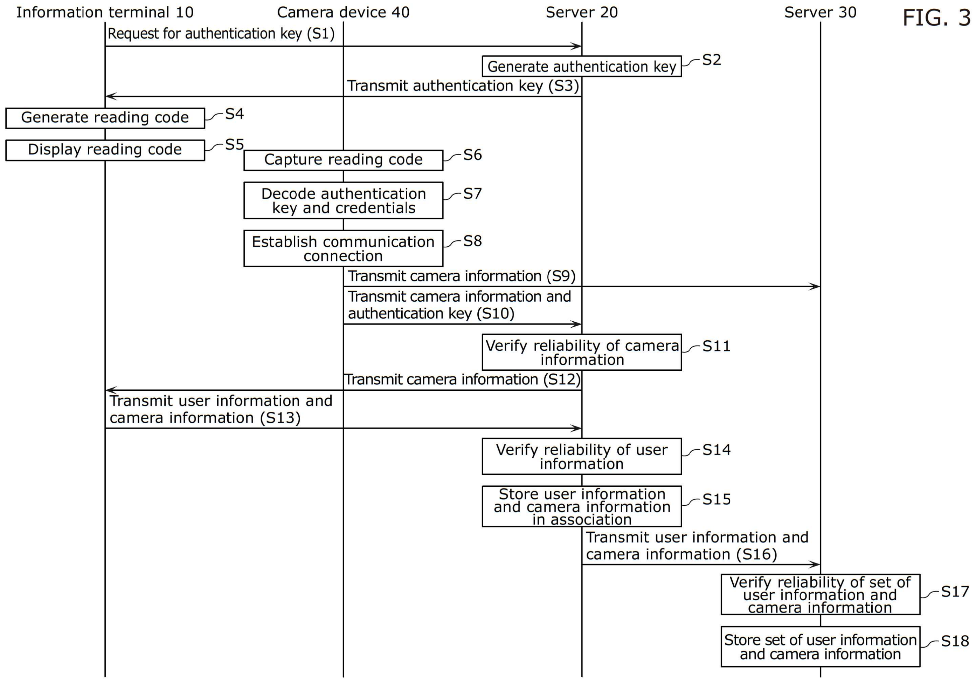

   FIG. 3 is a sequence diagram showing an example registration process in the system according to the embodiment.
[FIG. 4]

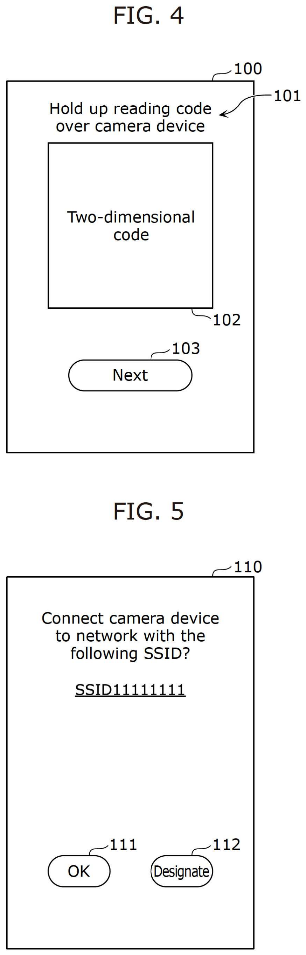

   FIG. 4 shows a first example UI to be displayed on a display of an information terminal.
[FIG. 5]
   FIG. 5 shows an example UI to be displayed on the information terminal that presents credentials.
[FIG. 6]

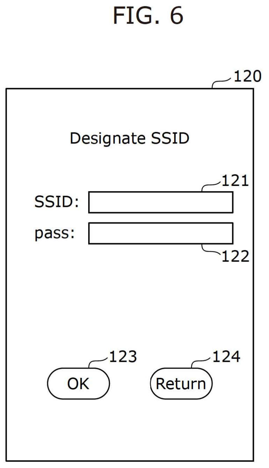

   FIG. 6 shows an example UI for receiving an input of credentials by the user.
[FIG. 7]

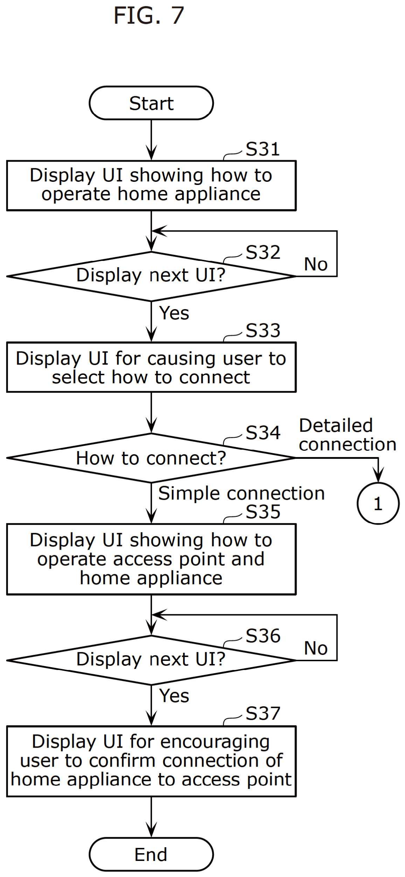

   FIG. 7 is a flowchart showing an example process of establishing communication connection to be executed by the information terminal.
[FIG. 8]

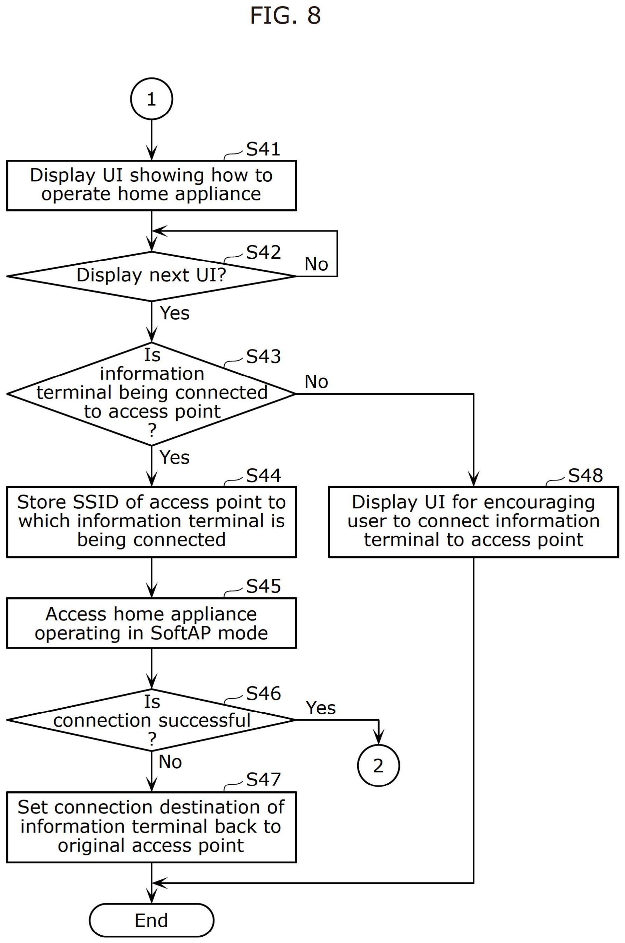

   FIG. 8 is a flowchart showing another example process of establishing communication connection to be executed by the information terminal.
[FIG. 9]

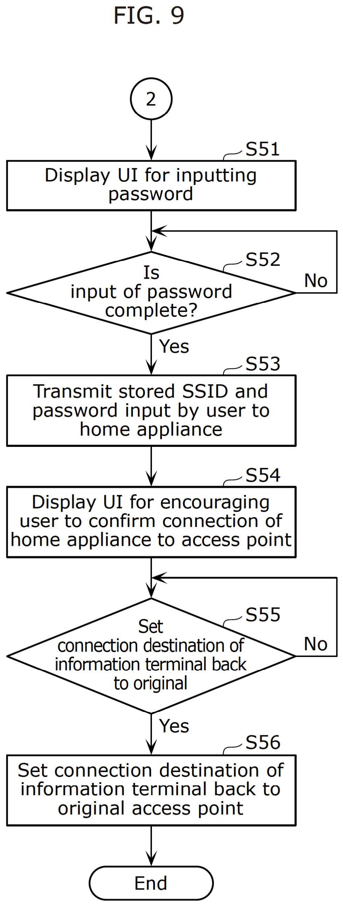

   FIG. 9 is a flowchart showing further another example process of establishing communication connection to be executed by the information terminal.
[FIG. 10]

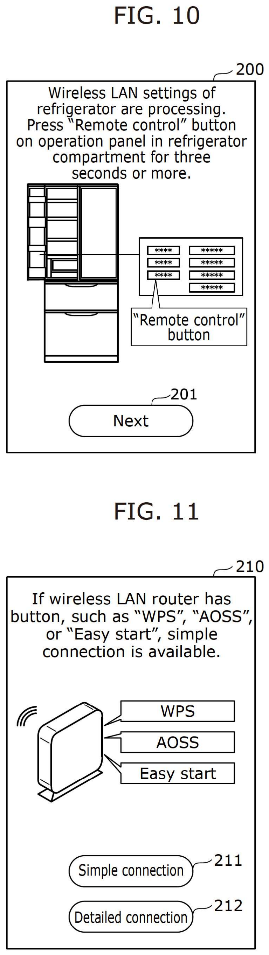

   FIG. 10 shows a first example UI to be displayed on the information terminal in the process of establishing the communication connection.
[FIG. 11]
   FIG. 11 shows a second example UI to be displayed on the information terminal in the process of establishing the communication connection.
[FIG. 12]

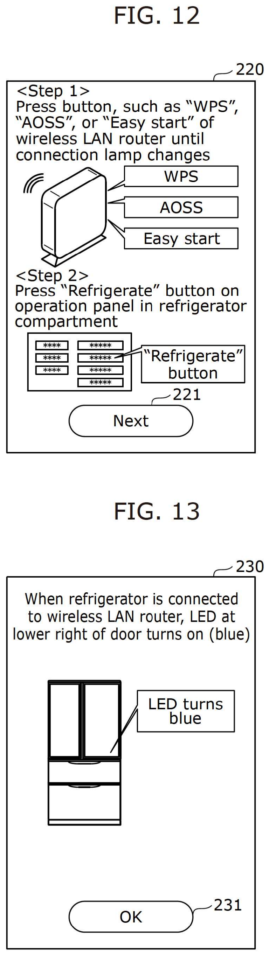

   FIG. 12 shows a third example UI to be displayed on the information terminal in the process of establishing the communication connection.
[FIG. 13]
   FIG. 13 shows a fourth example UI to be displayed on the information terminal in the process of establishing the communication connection.
[FIG. 14]

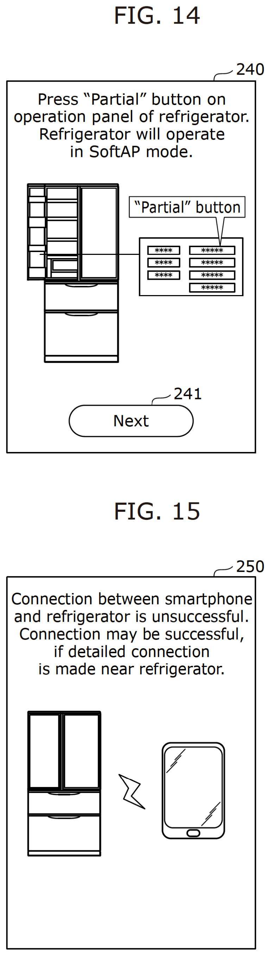

   FIG. 14 shows a fifth example UI to be displayed on the information terminal in the process of establishing the communication connection.
[FIG. 15]
   FIG. 15 shows a sixth example UI to be displayed on the information terminal in the process of establishing the communication connection.
[FIG. 16]

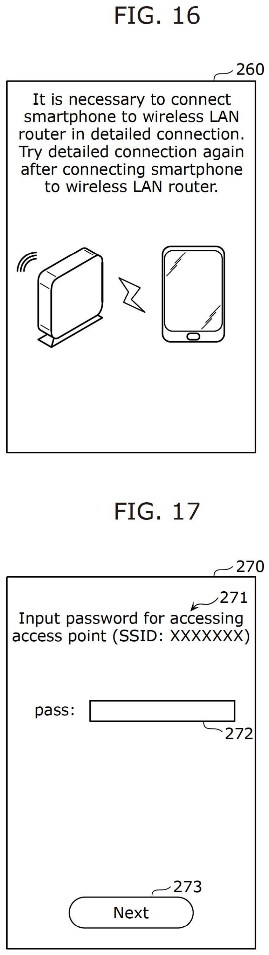

   FIG. 16 shows a seventh example UI to be displayed on the information terminal in the process of establishing the communication connection.
[FIG. 17]
   FIG. 17 shows an eighth example UI to be displayed on the information terminal in the process of establishing the communication connection.
[FIG. 18]

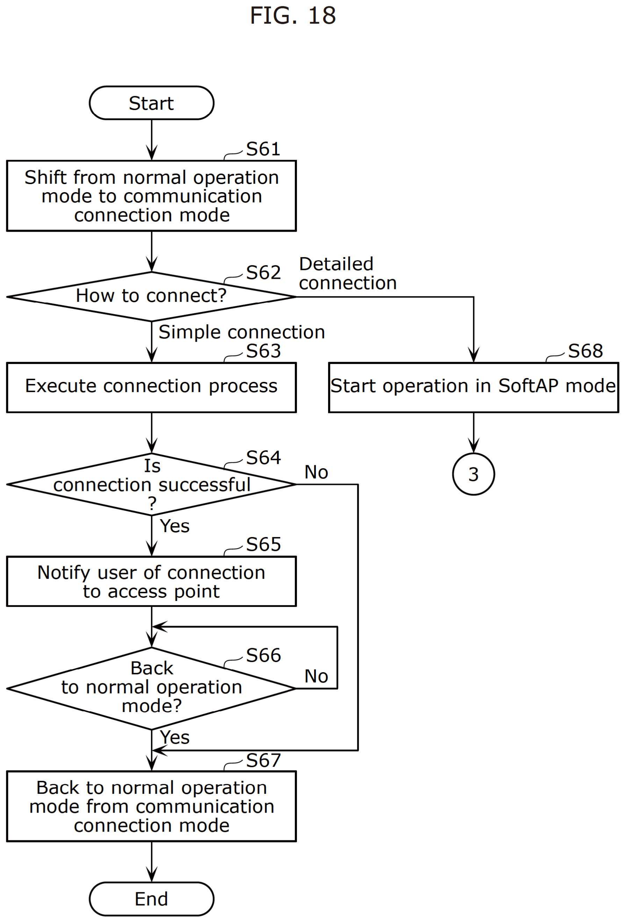

   FIG. 18 is a flowchart showing an example process of establishing communication connection to be executed by a home appliance.
[FIG. 19]

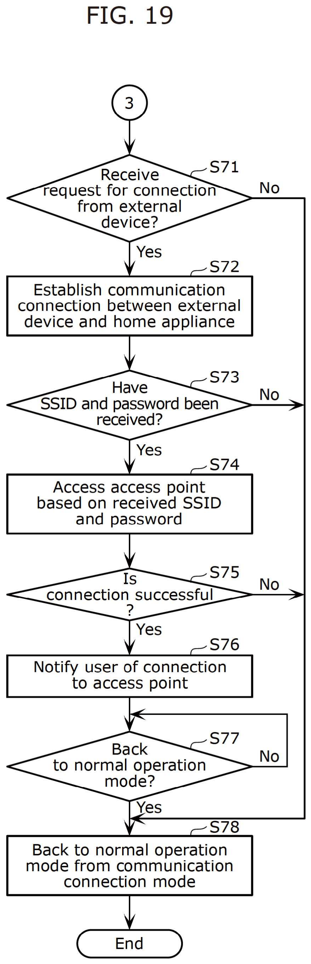

   FIG. 19 is another flowchart showing the example process of establishing the communication connection to be executed by the home appliance.
[FIG. 20]

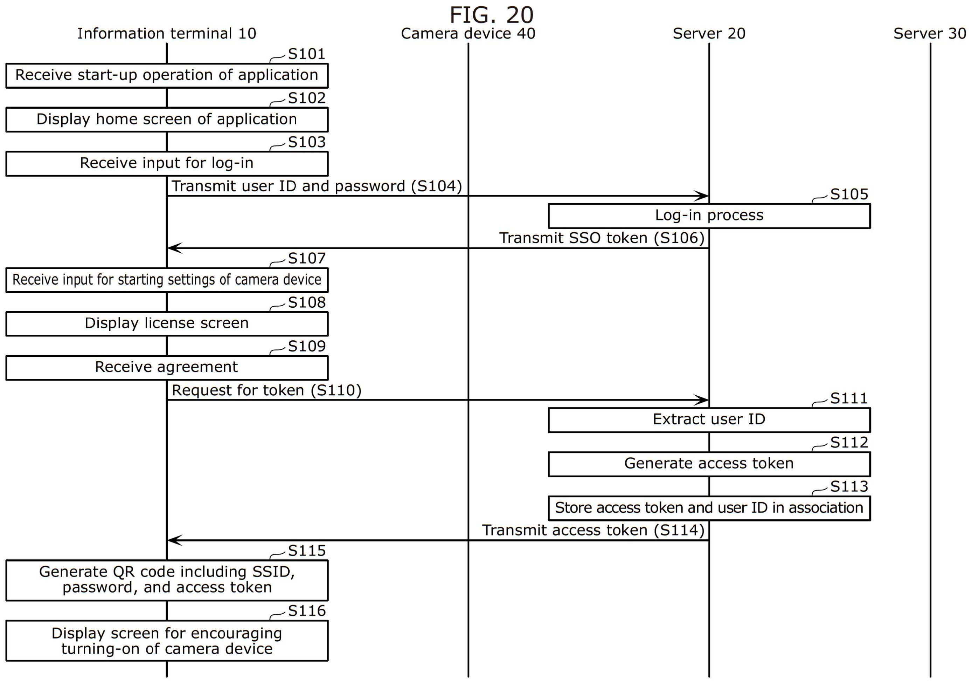

   FIG. 20 is a sequence diagram showing a specific example registration process in the system according to the embodiment.
[FIG. 21]

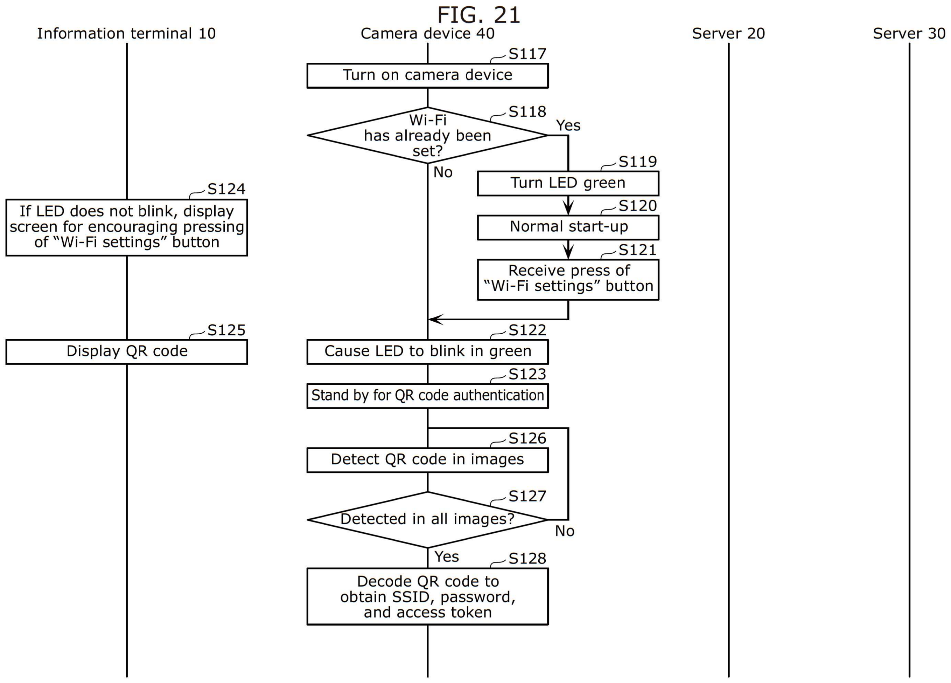

   FIG. 21 is another sequence diagram showing the specific example registration process in the system according to the embodiment.
[FIG. 22]

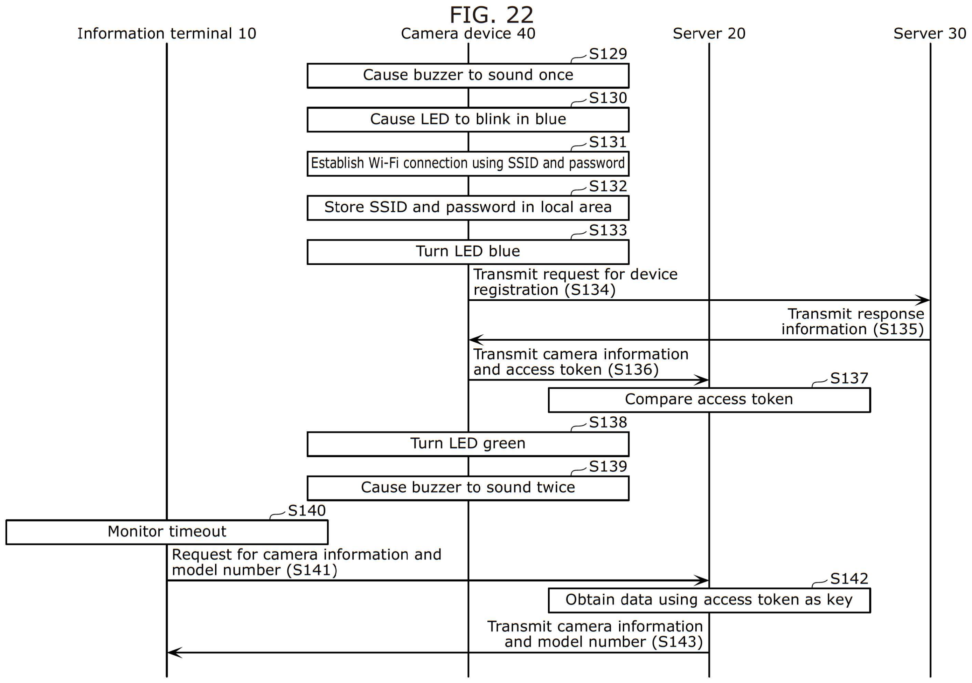

   FIG. 22 is further another sequence diagram showing the specific example registration process in the system according to the embodiment.
[FIG. 23]

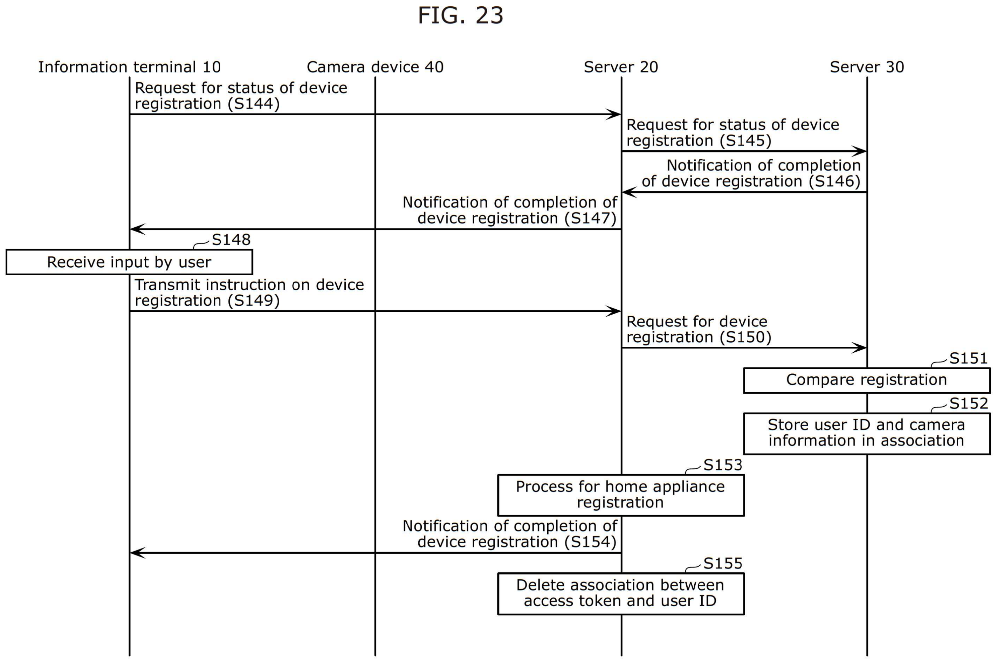

   FIG. 23 is yet another sequence diagram showing the specific example registration process in the system according to the embodiment.

### [Description of Embodiment]

In a system according to a first aspect of the present disclosure, a camera device having a communication function communicates via a network with a server communicably connectable to an information terminal. The information terminal includes: a terminal obtainer that receives an authentication key from the server; a generator that generates an optical reading code representing the authentication key; a display that displays the optical reading code generated; a terminal storage that stores user information for identifying a user; and a terminal transmitter that transmits the user information to the server. The camera device includes: a decoder that decodes the authentication key represented by the optical reading code, based on an image obtained by capturing the optical reading code displayed on the information terminal using an image sensor included in the camera device; a camera storage that stores camera information for identifying the camera device; and a camera communicator that transmits, to the server, the authentication key and the camera information stored in the camera storage. The server stores, in association with each other: the user information transmitted by the information terminal; and the camera information transmitted together with the authentication key by the camera device.

With this configuration, the information terminal displays the reading code representing the authentication key obtained from the server, and causes the camera device to read the reading code. The camera device then transmits the camera information together with the authentication key obtained by decoding the reading code to the server. Accordingly, the camera information about the camera device, which is to be registered at the server by the user using the information terminal, can be transmitted to the server. That is, unless accessing the server using the information terminal, the reading code to be read by the camera device is unavailable. This can reduce reading of a fake reading code and transmission of the camera information about the camera device by the camera device. In this manner, the server can obtain reliable camera information from the camera device, and can thus store the user information and the reliable camera information in association with each other.

A system according to a second aspect of the present disclosure is an embodiment of the first aspect. When the authentication key received together with the camera information from the camera device has been transmitted already, the server determines that the camera information is reliable, and stores the user information received and the camera information determined to be reliable in association with each other.

Accordingly, the server can associate the user information and the camera information determined to be reliable.

A system according to a third aspect of the present disclosure is an embodiment of the first or second aspect. When receiving the camera information from the camera device, the server transmits the camera information received to the information terminal. When transmitting the user information to the server, the terminal transmitter transmits, together with the user information to the server, the camera information received from the server. When the camera information received together with the user information from the information terminal has been transmitted already, the server determines that the user information is reliable, and stores the user information determined to be reliable and the camera information in association with each other.

Accordingly, the server can associate the user information determined to be reliable and the camera information determined to be reliable.

A system according to a fourth aspect of the present disclosure is an embodiment of any one of the first to third aspects. The terminal obtainer further obtains credentials for accessing the network. The generator generates the optical reading code representing the authentication key and the credentials. The decoder decodes the authentication key and the credentials represented by the optical reading code. The camera communicator establishes communication with the network using the credentials, and transmits the authentication key and the camera information to the server after establishing the communication.

Accordingly, the camera device can easily establish communications with the network.

A system according to a fifth aspect of the present disclosure is an embodiment of the fourth aspect. The terminal obtainer obtains the credentials via the network from a home appliance that stores the credentials and is communicably connected to the network using the credentials.

With this configuration, the camera device establishes communications with the network using the credentials stored in the home appliance connected to the network already. That is, the camera device can easily establish the communications with the network.

A system according to a sixth aspect of the present disclosure is an embodiment of the fourth aspect. The terminal storage stores the credentials used for setting communication connection of the home appliance communicably connected to the network using the credentials. The terminal obtainer obtains the credentials from the terminal storage.

With this configuration, the camera device establishes communications with the network using the credentials used in setting the communication connection of the home appliance. That is, the camera device can easily establish the communications with the network.

A system according to a seventh aspect of the present disclosure is an embodiment of the fourth aspect. The information terminal further includes a receiver that receives an input by a user. The terminal obtainer obtains the credentials generated based on the input received by the receiver.

With this configuration, the camera device establishes communications with the network using the credentials generated based on the input by the user. The user can thus cause the camera device to establish communications using desired credentials.

A system according to an eighth aspect of the present disclosure is an embodiment of any one of the first to seventh aspects. The authentication key is invalidated after a first period elapses from when the authentication key is transmitted by the server.

This can reduce the abuse of the authentication key by a third party to cause the server to store the camera information and the user information in association with each other.

A system according to a ninth aspect of the present disclosure is an embodiment of any one of the first to eighth aspects. The optical reading code is invalidated after a second period elapses from when the optical reading code is generated by the generator.

This can reduce the abuse of the reading code by a third party to cause the server to store the camera information and the user information in association with each other.

An information terminal according to a tenth aspect of the present disclosure is communicably connected via a network to a server communicably connectable to a camera device having a communication function. The information terminal includes: a terminal obtainer that obtains, from the server, an authentication key for causing the server to verify that information received together with the authentication key is reliable; a generator that generates an optical reading code representing the authentication key; a display that displays the optical reading code generated by the generator so as to be read by the camera device; a terminal storage that stores user information for identifying a user; and a terminal transmitter that transmits the user information to the server.

With this configuration, the information terminal displays the reading code representing the authentication key obtained from the server, and causes the camera device to read the reading code. For example, it can be used by the camera device to transmit the camera information together with the authentication key obtained by decoding the reading code to the server. Unless accessing the server using the information terminal, the reading code to be read by the camera device is unavailable. This can reduce reading of a fake reading code and transmission of the camera information about the camera device by the camera device.

By a communication setting method according to an eleventh aspect of the present disclosure, a camera device having a communication function communicates via a network with a server communicably connectable to an information terminal. The communication setting method includes: obtaining, by the information terminal, an authentication key from the server; generating, by the information terminal, an optical reading code representing the authentication key; displaying, by the information terminal, the optical reading code generated; transmitting, by the information terminal, user information for identifying a user to the server; capturing, by the camera device, the optical reading code displayed on the information terminal; decoding, by the camera device, the authentication key represented by the optical reading code based on an image obtained by the capturing; transmitting, by the camera device, the authentication key and camera information for identifying the camera device to the server; and storing, by the server in association with each other, the user information transmitted by the information terminal and the camera information transmitted together with the authentication key by the camera device.

With this configuration, the information terminal displays the reading code representing the authentication key obtained from the server, and causes the camera device to read the reading code. The camera device then transmits the camera information together with the authentication key obtained by decoding the reading code to the server. Accordingly, the camera information about the camera device, which is to be registered at the server by the user using the information terminal, can be transmitted to the server. That is, unless accessing the server using the information terminal, the reading code to be read by the camera device is unavailable. This can reduce reading of a fake reading code and transmission of the camera information about the camera device by the camera device. In this manner, the server can obtain reliable camera information from the camera device, and can thus store the user information and the reliable camera information in association with each other.

Note that these general and specific aspects of the present disclosure may be implemented using a device, an integrated circuit, a computer program, or a non-transitory recording medium, such as a computer-readable CD-ROM, or any combination of devices, methods, systems, integrated circuits, computer programs, or non-transitory recording media.

Now, an embodiment will be described in detail with reference to the drawings as appropriate. More detailed description than necessary may be omitted. For example, detailed description of already well known matters or redundant description of substantially the same configurations may be omitted. This is for avoiding unnecessarily redundant description and for easier understanding of the present disclosure by the those skilled in the art.

Note that the present inventor provides the appended drawings and the following description for sufficient understanding of the present disclosure by the those skilled in the art and does not intend to limit the subject matters recited in the claims.

### [Embodiment]

### [1. Configuration]

FIG. 1 is for illustrating an outline of a system according to the embodiment.

Specifically, FIG. 1 shows information terminal 10, server 20, server 30, camera device 40, home appliance 50, network 60, and router 61. Among these elements, system 1 includes information terminal 10, server 20, and camera device 40, for example. System 1 may further include server 30 and home appliance 50. In system 1, the elements described above are not necessarily hardware. The elements may be achieved by one or more processors included in at least one device of information terminal 10, server 20, camera device 40, or home appliance 50 executing necessary software out of the software stored in information terminal 10, the software stored in server 20, the software stored in camera device 40, and the software stored in home appliance 50. Information terminal 10, server 20, server 30, camera device 40, and home appliance 50 are communicably connected to each other via network 60. Router 61 is a device that mediates communication connection of camera device 40 or home appliance 50 with network 60. Router 61 may mediate communication connection of information terminal 10 with network 60.

System 1 is for causing servers 20 and 30 to store the camera information for identifying camera device 40 and the user information for identifying the user in association with each other. System 1 may cause servers 20 and 30 to store the device information for identifying home appliance 50 and the user information in association with each other.

FIG. 2 shows an example configuration of the system according to the embodiment.

System 1 includes information terminal 10, server 20, server 30, camera device 40, and home appliance 50. FIG. 2 shows no router 61.

Information terminal 10 includes terminal obtainer 11, terminal transmitter 12, generator 13, terminal storage 14, display 15, and receiver 16. Information terminal 10 is a smartphone or a tablet terminal, for example.

Terminal obtainer 11 receives information from at least one device of server 20, server 30, camera device 40, or home appliance 50 via network 60. Specifically, terminal obtainer 11 receives an authentication key from server 20. Terminal obtainer 11 may obtain the credentials for accessing network 60.

Terminal transmitter 12 transmits information to at least one device of server 20, server 30, camera device 40, or home appliance 50 via network 60. Specifically, terminal transmitter 12 may transmit user information to server 20. When transmitting the user information to server 20, terminal transmitter 12 may transmit, together with the user information to server 20, the camera information received from server 20.

Generator 13 generates an optical reading code. Specifically, the optical reading code may be a two-dimensional code, such as a quick response (QR) code (registered trademark); a barcode; or a specific image. The reading code represents an authentication key. The reading code may represent an authentication key and credentials. That is, generator 13 may generate a reading code representing an authentication key, or a reading code representing an authentication key and credentials. The reading code may be invalidated after a second period elapses from when the optical reading code is generated by generator 13. For example, the second period is three minutes. The second period is not necessarily three minutes, but may be one minute, five minutes, or any other suitable period of time.

Here, the authentication key is issued by server 20 and used determining that the user information and the camera information to be newly managed by server 20 are reliable. The credentials are for accessing network 60, as described above. Specifically, the credentials are for establishing communication connection with router 61 and includes the SSID of router 61 and the associated password.

Terminal storage 14 stores the user information for identifying the user. User information may be generated in information terminal 10 based on an input by the user received by receiver 16, which will be described later. Terminal storage 14 also stores programs for fulfilling the functions of information terminal 10. Terminal storage 14 is a non-volatile memory, for example.

Display 15 displays an image or user interface (UI) generated in information terminal 10. Specifically, display 15 displays a reading code generated by generator 13. Display 15 is a display unit, for example.

Receiver 16 receives an input by the user. Specifically, receiver 16 receives an input to a UI displayed on display 15. Receiver 16 is a touch panel, for example. Note that receiver 16 is not necessarily a touch panel but may be another input device, such as a keyboard or a mouse.

Server 20 includes communicator 21, storage 22, and controller 23.

Communicator 21 exchanges information with at least one device of information terminal 10, server 30, camera device 40, or home appliance 50 via network 60. Specifically, communicator 21 receives a request for an authentication key from information terminal 10. Communicator 21 transmits the authentication key to information terminal 10. Communicator 21 also receives the authentication key and the camera information from camera device 40. Communicator 21 also transmits the camera information to information terminal 10. Communicator 21 also receives user information from information terminal 10. Communicator 21 also transmits the set of the associated user information and camera information to server 30.

For example, communicator 21 may be a communication interface (IF) connected to a wired LAN or a communication IF to be connected to a wireless LAN. Communicator 21 may be a communication IF to be connected to a mobile phone communication network.

Storage 22 stores, in association with each other, the user information transmitted by information terminal 10 and the camera information transmitted together with the authentication key by camera device 40. Storage 22 also stores the programs for fulfilling the functions of server 20. For example, storage 22 is a non-volatile memory device, such as a solid-state drive (SSD) or a hard disk drive (HDD).

Once communicator 21 receives the request for the authentication key, controller 23 generates the authentication key. Controller 23 determines whether the authentication key received together with the camera information from camera device 40 has been transmitted already (i.e., whether the authentication key has been transmitted by server 20). Assume that the authentication key received together with the camera information from camera device 40 has been transmitted already. In this case, controller 23 determines that the camera information is reliable, and causes storage 22 to store the received user information and the camera information determined to be reliable in association with each other. On the other hand, assume that the authentication key received together with the camera information from camera device 40 has not been transmitted yet. In this case, controller 23 determines that the camera information is unreliable, and there is no need to cause storage 22 to store the camera information determined to be unreliable. That is, controller 23 may discard the camera information determined to be unreliable. When determining that the camera information is unreliable, controller 23 may cause storage 22 to store the camera information together with the information indicating that the camera information is unreliable.

Note that the authentication key may be invalidated after a first period elapses from when the authentication key is transmitted from server 20 to information terminal 10. For example, controller 23 may be determine that the camera information received with the invalidated authentication key is unreliable. That is, controller 23 determines that the camera information received with a valid authentication key is reliable. The first period is three minutes, for example. The first period is not necessarily three minutes, but may be one minute, five minutes, or any other suitable period of time. For the first period, the same time as or a different time from the second period may be defined.

Once communicator 21 receives the camera information from camera device 40, controller 23 may transmit the received camera information to information terminal 10 via communicator 21. Controller 23 then determines whether the camera information received together with user information from information terminal 10 has been transmitted already. Assume that the camera information received together with the user information from information terminal 10 has been transmitted already. In this case, controller 23 determines that the user information is reliable, and causes storage 22 to store the user information determined to be reliable and the camera information in association with each other. On the other hand, assume that the camera information received together with the user information from information terminal 10 has not been transmitted yet. In this case, controller 23 determines that the user information is unreliable, and there is no need to cause storage 22 to store the user information determined to be unreliable. That is, controller 23 may discard the user information determined to be unreliable. When determining that the user information is unreliable, controller 23 may cause storage 22 to store the user information together with the information indicating that the user information is unreliable.

Server 30 includes communicator 31, storage 32, and controller 33.

Communicator 31 exchanges information with at least one device of information terminal 10, server 20, camera device 40, or home appliance 50 via network 60. Specifically, communicator 31 receives the camera information from camera device 40. Communicator 31 also receives the set of the associated user information and camera information from server 20. For example, communicator 31 may be a communication IF to be connected to a wired LAN or a communication IF to be connected to a wireless LAN. Communicator 31 may be a communication IF to be connected to a mobile phone communication network.

Storage 32 stores the set of the user information and the camera information received from server 20. Storage 32 also stores the programs for fulfilling the functions of server 30. For example, storage 32 is a non-volatile memory device, such as an SSD or an HDD.

Controller 33 fulfills the functions of server 30.

Camera device 40 includes image sensor 41, decoder 42, camera storage 43, and camera communicator 44. For example, camera device 40 is attached to the top of the door of home appliance (e.g., refrigerator) 50. If home appliance 50 is a refrigerator, camera device 40 captures an image of the food taken in and out of the refrigerator or stored in the refrigerator. Camera device 40 may be incorporated into the refrigerator in advance or may be attached from outside to the refrigerator later. By analyzing the image captured by camera device 40, the food stored in the refrigerator can be recognized.

Image sensor 41 detects an image formed on a surface of image sensor 41 through an optical system, such as a lens (not shown), and generates an image representing the detected image.

Decoder 42 decodes the authentication key represented by the reading code, based on an image obtained by capturing the reading code displayed on information terminal 10 using image sensor 41 (i.e., the image including the reading code). If the reading code represents the authentication key and the credentials, decoder 42 decodes the authentication key and the credentials.

Camera storage 43 stores the camera information for identifying camera device 40. Camera storage 43 also stores programs for fulfilling the function of camera device 40.

Camera communicator 44 exchanges information with at least one device of information terminal 10, server 20, server 30, or home appliance 50 via network 60. Specifically, camera communicator 44 transmits the authentication key and the camera information stored in camera storage 43 to server 20. Camera communicator 44 may establish communications with network 60 using the credentials decoded by decoder 42, and transmit the authentication key and the camera information to server 20 after establishing the communications.

Home appliance 50 is an apparatus communicably connectable to at least one device of information terminal 10, server 20, server 30, or camera device 40 via network 60. Home appliance 50 is a refrigerator, for example. Note that home appliance 50 is not necessarily a refrigerator but may be another home appliance, such as a microwave, a toaster oven, or a washing machine.

### [2. Operation]

Now, an operation of system 1 will be described.

FIG. 3 is a sequence diagram showing an example registration process in the system according to the embodiment.

When executing a predetermined application, information terminal 10 receives a predetermined input by a user, thereby transmitting a request for the authentication key to server 20 (S1).

When receiving the request for the authentication key from information terminal 10, server 20 generates the authentication key (S2).

Next, server 20 transmits the generated authentication key to information terminal 10 which has transmitted the request for the authentication key (S3).

When receiving the authentication key from server 20, information terminal 10 reads credentials for establishing communications with router 61 from terminal storage 14, and generates a reading code representing the received authentication key and the read credentials (S4).

Information terminal 10 then causes display 15 to display the generated reading code (S5). For example, information terminal 10 may cause display 15 to display UI 100 as shown in FIG. 4.

FIG. 4 shows a first example UI to be displayed on the display of the information terminal.

UI 100 includes message 101, reading code 102 which is a two-dimensional code, and "Next" button 103. Message 101 encourages the user to hold up the reading code over camera device 40 to cause camera device 40 to capture the code. For example, "Next" button 103 is for receiving an input to shift to the next UI after the user has held up reading code 102 over camera device 40.

In this manner, the user holds up information terminal 10 displaying reading code 102 over camera device 40 so that camera device 40 captures reading code 102 (S6).

Next, camera device 40 decodes the authentication key and the credentials represented by reading code 102, based on the captured image (S7).

Camera device 40 then establishes communication connection with router 61 using the decoded credentials (S8). Accordingly, camera device 40 becomes communicably connectable to network 60 via router 61.

After that, camera device 40 reads the camera information for identifying camera device 40 from camera storage 43, and transmits the read camera information to server 30 (S9).

Camera device 40 transmits the read camera information and the decoded authentication key to server 20 (S10).

When receiving the camera information and the authentication key from camera device 40, server 20 verifies the reliability of the camera information (S11). Specifically, assume that the authentication key received together with the camera information from camera device 40 has been transmitted already but within the first period. In this case, server 20 determines that the camera information received together with this authentication key is reliable. On the other hand, if not, server 20 determines that the camera information received together with this authentication key is unreliable. When determining that the camera information is reliable, server 20 executes next step S12. When determining that the camera information is unreliable, for example, server 20 discards the camera information and ends the process.

Server 20 transmits the camera information determined to be reliable to information terminal 10 (S12).

When receiving the camera information from server 20, information terminal 10 transmits the user information stored in terminal storage 14 and the received camera information to server 20 (S13).

When receiving the user information and the camera information, server 20 verifies the reliability of the received user information (S14). Specifically, if the camera information received together with user information from information terminal 10 has been transmitted already, server 20 determines that the user information is reliable. On the other hand, if not, server 20 determines that the user information received together with the camera information is unreliable. When determining that the user information is reliable, server 20 executes next step S15. When determining that the user information is unreliable, for example, server 20 discards the user information and ends the process.

Since the reliabilities of both the user information and the camera information are verified in steps S11 and S14, server 20 causes storage 22 to store the user information and the camera information in association with each other (S15).

Next, server 20 transmits the set of the associated user information and camera information to server 30 (S16).

When receiving the set of the user information and the camera information, server 30 verifies the reliability of the set (S17). Specifically, server 30 determines whether the camera information received in step S9 and the camera information included in the set received in step S16 are identical. If these camera information are identical, server 30 determines that the set is reliable. On the other hand, if not, server 30 determines that the set is unreliable. When determining that the set is reliable, server 30 executes next step S18. When determining that the set is unreliable, for example, server 30 discards the set and ends the process.

Since the reliability of the set of the user information and the camera information is verified in step S17, server 30 causes storage 32 to store the set (S18).

Here, when the reading code is generated in step S4, information terminal 10 may determine the credentials out of the information represented by the reading code as follows.

A first example will be described. In the first example, information terminal 10 obtains the credentials used by home appliance 50 for accessing network 60 from home appliance 50. The credentials obtained from home appliance 50 may be used to generate the reading code. That is, in this case, information terminal 10 causes the reading code to represent the authentication key and the credentials obtained from home appliance 50.

A second example will be described. Terminal storage 14 of information terminal 10 may store the credentials used in setting the communication connection of home appliance 50. In the second example, information terminal 10 may thus use the following credentials to generate the reading code. The credentials are used in setting when home appliance 50 accesses network 60 and stored in terminal storage 14. That is, in this case, information terminal 10 causes the reading code to represent the authentication key and the credentials used by home appliance 50 to access network 60 and stored in terminal storage 14.

A third example will be described. In this case, information terminal 10 may use the following credentials to generate the reading code. The credentials are generated based on an input received by receiver 16 of information terminal 10. That is, in this case, information terminal 10 causes the reading code to represent the authentication key and the credentials generated based on the input received by receiver 16.

FIG. 5 shows an example UI to be displayed on an information terminal that presents credentials. UI 110 may be displayed on information terminal 10 after step S3.

UI 110 includes an SSID included in the following credentials. The credentials are obtained from home appliance 50, or used in setting the communication connection of home appliance 50. UI 110 also includes "OK" button 111 and "Designate" button 112. "OK" button 111 is for receiving an input for accepting the establishment of communication connection with the presented SSID. "Designate" button 112 is for receiving an input for shifting to UI 120 (see FIG. 6) for receiving the credentials as designated by the user. When receiving an input of "OK" button 111, information terminal 10 uses the credentials including the presented SSID to generate the reading code. When receiving an input of "Designate" button 112, information terminal 10 displays UI 120.

FIG. 6 shows an example UI for receiving an input of credentials by the user.

UI 120 includes input box 121, input box 122, "OK" button 123, and "Return" button 124. Input box 121 is for receiving an input of the SSID. Input box 122 is for receiving a password for verifying communication connection at the SSID. "OK" button 123 is confirming the information input to input box 121 and input box 122. "Return" button 124 is for the shift to UI 110. When receiving an input of "OK" button 123 with the input to input box 121 and input box 122 made, information terminal 10 generates credentials based on the input to input box 121 and input box 122 and uses the generated credentials to generate the reading code. When receiving an input of "Return" button 124, information terminal 10 displays UI 110.

Now, a process of establishing communication connection between home appliance 50 and router 61 will be described. The user connects home appliance 50 to router 61 in accordance with a UI provided by a predetermined application.

FIGS. 7 to 9 are flowcharts showing an example process of establishing communication connection to be executed by the information terminal. FIGS. 10 to 17 show an example UI displayed on the information terminal in the process of establishing the communication connection.

Information terminal 10 displays a UI showing how to operate home appliance 50 (S31). Here, display 15 of information terminal 10 displays UI 200 shown in FIG. 10. By means of UI 200, the user can grasp that there is a need to press the "Remote control" button on home appliance 50 for three seconds or more. Once the "Remote control" button has been pressed for three seconds or more, home appliance 50 shifts from a normal operation mode to a communication connection mode. The normal operation mode and the communication connection mode will be described later.

Next, information terminal 10 determines whether to display the next UI (S32). If the user touches button 201 of UI 200, information terminal 10 determines to display the next UI (Yes in S32), the process proceeds to step S33. On the other hand, determining not to display the next UI (No in S32) until the user touches button 201, information terminal 10 does nothing (i.e., keeps displaying UI 200) and the process returns to step S32.

Information terminal 10 then displays an UI for causing the user to select how to connect home appliance 50 to router 61 functioning as an access point (S33). Here, display 15 of information terminal 10 displays UI 210 shown in FIG. 11. By means of UI 210, the user can select simple connection or detailed connection as a method of connecting home appliance 50 to router 61.

After that, information terminal 10 determines whether the user has selected simple connection or detailed connection as the connection method (S34). If the user touches button 211 of UI 210, information terminal 10 determines that the user has selected the simple connection as the connection method and the process proceeds to step S35. On the other hand, if the user touches button 212 of UI 210, information terminal 10 determines the user has selected the detailed connection as the connection method and the process proceeds to step S41 in FIG. 8.

The simple connection will be described. The simple connection is the method of easily establishing the communication connection between home appliance 50 and router 61 by causing home appliance 50 and router 61 to execute the connection process at the same time. Information terminal 10 displays a UI showing how to operate home appliance 50 and the access point necessary for the simple connection (S35). Here, display 15 of information terminal 10 displays UI 220 shown in FIG. 12. By means of UI 220, the user can grasp the operation necessary for the simple connection. When the "Refrigerate" button is pressed on the operation panel in home appliance 50 in the communication connection mode, home appliance 50 executes the connection process. At the same time as the connection process of home appliance 50, router 61 also executes the connection process so as to establish the communication connection between home appliance 50 and router 61. The connection process executed by home appliance 50 will be described later.

Next, information terminal 10 determines whether to display the next UI (S36). If the user touches button 221 of UI 220, information terminal 10 determines to display the next UI (Yes in S36) and the process proceeds to step S37. On the other hand, determining not to display the next UI (No in S36) until the user touches button 221, information terminal 10 does nothing (i.e., keeps displaying UI 220) and the process returns to step S36.

In step S37, information terminal 10 displays a UI for encouraging the user to confirm the connection of home appliance 50 to the access point. Here, display 15 of information terminal 10 displays UI 230 shown in FIG. 13. By means of UI 230, the user can check whether home appliance 50 has been connected to the access point.

Now, the detailed connection will be described. The detailed connection is a method of establishing the communication connection between home appliance 50 and router 61 by transmitting the SSID of router 61 and a password necessary for accessing router 61 from information terminal 10 to home appliance 50.

Information terminal 10 displays a UI showing how to operate home appliance 50 (S41). Here, display 15 of information terminal 10 displays UI 240 shown in FIG. 14. By means of UI 240, the user can grasp that there is a need to press a "Partial" button of home appliance 50. When the "Partial" button is pressed on the operation panel in home appliance 50 in the communication connection mode, home appliance 50 starts the operation in a SoftAP mode.

Next, information terminal 10 determines whether to display the next UI (S42). If the user touches button 241 of UI 240, information terminal 10 determines to display the next UI (Yes in S42), the process proceeds to step S43. On the other hand, determining not to display the next UI (No in S42) until the user touches button 241, information terminal 10 does nothing (i.e., keeps displaying UI 240) and the process returns to step S42.

Information terminal 10 then determines whether information terminal 10 is being connected to the access point (S43). This determination is made by information terminal 10 obtaining the SSID of the access point being connected from the OS of information terminal 10. If the SSID of the access point being connected is available from the OS, information terminal 10 is determined as being connected to the access point (Yes in S43) and the process proceeds to step S44. On the other hand, if the SSID of the access point being connected is unavailable from the OS, information terminal 10 is determined as not being connected to the access point (No in S43) and the process proceeds to step S48.

After that, information terminal 10 stores the SSID of the access point to which information terminal 10 is being connected (S44). If router 61 is the access point to which information terminal 10 is being connected, information terminal 10 stores the SSID of router 61. In the processes in steps S43 and S44, information terminal 10 can obtain, from the OS, the SSID of the access point to which information terminal 10 is being connected.

Next, information terminal 10 accesses home appliance 50 operating in the SoftAP mode (S45). Information terminal 10 transmits a request for connection to home appliance 50 operating in the SoftAP mode. In this embodiment, as described in step S41, since home appliance 50 is operating in the SoftAP mode, information terminal 10 transmits the request for connection to home appliance 50. As a result, the communication connection is established between information terminal 10 and home appliance 50.

In order to access home appliance 50 operating in the SoftAP mode, information terminal 10 needs to specify the SSID of home appliance 50 and the password necessary for the access. In this embodiment, the SSID of home appliance 50 and the password are determined in advance at the time of manufacturing home appliance 50 and incorporated into the application program in advance. Accordingly, when being installed, information terminal 10 can specify the SSID of home appliance 50 and the password necessary for the access. There is no need for the user to designate the SSID of home appliance 50 on information terminal 10 or input the password necessary for the access into information terminal 10, improving the convenience of the user. If the operation requires no password for information terminal 10 to access home appliance 50 operating in the SoftAP mode, only the SSID of home appliance 50 may be incorporated into the application program in advance.

Information terminal 10 then determines whether the connection to home appliance 50 operating in the SoftAP mode is successful (S46). If information terminal 10 determines that the connection to home appliance 50 operating in the SoftAP mode is successful (Yes in S46), the process proceeds to step S51 shown in FIG. 9. On the other hand, if information terminal 10 determines that the connection to home appliance 50 operating in the SoftAP mode is unsuccessful (No in S46), the process proceeds to step S47.

After that, information terminal 10 displays a UI for causing the user to input the password necessary for the access to the access point (S51). Here, display 15 of information terminal 10 displays UI 270 shown in FIG. 17. Area 271 of UI 270 displays the SSID (i.e., the SSID of router 61 in this embodiment) stored in step S44. The user inputs the password for accessing the access point with the SSID displayed on UI 270 to input box 272. Note that the password for accessing the access point is received from the user, because information terminal 10 cannot obtain the password from the OS.

Next, information terminal 10 determines whether the input of the password is complete (S52). If the user inputs the password to input box 272 and touches button 273, information terminal 10 determines that the input of the password is complete (Yes in S52) and the process proceeds to step S53. On the other hand, determining that the input of the password is incomplete until the user inputs the password to input box 272 and touches button 273 (No in S52), information terminal 10 does nothing (i.e., keeps displaying UI 270) and the process returns to step S52.

Next, information terminal 10 transmits the SSID stored in step S44 and the password input by the user through the established communication connection to home appliance 50 (S53). Information terminal 10 instructs the OS to transmit the SSID stored in step S44 and the password input by the user. Under the control by the OS, transmission from information terminal 10 to home appliance 50 is achieved. In this embodiment, the SSID of router 61 and the password necessary for the access to router 61 are transmitted to home appliance 50. Home appliance 50 then tries to access router 61 based on the received SSID and password.

Information terminal 10 then displays an UI for encouraging the user to confirm the connection of home appliance 50 to the access point (S54). Here, display 15 of information terminal 10 is UI 230. By means of UI 230, the user can check whether home appliance 50 has accessed the access point.

After that, in step S55, information terminal 10 determines whether to set the connection destination of information terminal 10 back to the original access point. If the user touches button 231 of UI 230 or in a predetermined time (e.g., five minutes) after displaying UI 230, information terminal 10 determines to set the connection destination of information terminal 10 back to the original access point (Yes in S55) and the process proceeds to step S56. On the other hand, determining not to set the connection destination of information terminal 10 back to the original access point (No in S55) until the user touches button 231, information terminal 10 does nothing (i.e., keeps displaying UI 230) and the process returns to step S55.

Next, in step S56, information terminal 10 sets the connection destination of information terminal 10 back to the original access point. Information terminal 10 instructs the OS to access the access point with the SSID stored in step S44. Under the control by the OS, the connection destination of information terminal 10 is set back to the original access point. In this embodiment, the connection destination of information terminal 10 is set back to router 61 from home appliance 50.

In this embodiment, in the process of the detailed connection, the connection destination of information terminal 10 changes from router 61 to home appliance 50. There is a problem that the user cannot use information terminal 10 as usual with information terminal 10 connected to home appliance 50. In this embodiment, the process in step S56 can set the connection destination of information terminal 10 back to router 61, improving the convenience of the user.

Now, referring back to the flowchart in FIG. 8, a process will be described where the connection to home appliance 50 operating in the SoftAP mode is determined to be unsuccessful in step S46.

Information terminal 10 sets the connection destination of information terminal 10 back to the original access point (S47). Information terminal 10 instructs the OS to access the access point with the SSID stored in step S44. Under the control by the OS, the connection destination of information terminal 10 is set back to the original access point. The state in which information terminal 10 cannot access home appliance 50 operating in the SoftAP mode means that the detailed connection cannot continue. To address the problem, in this embodiment, the connection destination of information terminal 10 is set back to router 61 to which information terminal 10 is originally connected, improving the convenience of the user.

In step S47, information terminal 10 may display UI 250 in FIG. 15. The user who has checked UI 250 performs the detailed connection near home appliance 50 again, information terminal 10 may be able to access home appliance 50 operating in the SoftAP mode.

Next, a process will be described where information terminal 10 is determined as not being connected to the access point in step S43. In step S48, information terminal 10 displays an UI for encouraging the user to connect the information terminal to the access point. Here, display 15 of information terminal 10 is UI 260 in FIG. 16. For the detailed connection, information terminal 10 needs to be connected to the access point. The user who has checked UI 260 can grasp that there is a need to connect information terminal 10 to the access point.

FIGS. 18 and 19 are flowcharts showing an example process of establishing communication connection to be executed by a home appliance.

Once the user who has checked UI 200 shown in FIG. 10 presses the "Remote control" button on the operation panel for three seconds or more, home appliance 50 shifts from the normal operation mode to the communication connection mode (S61). In the normal operation mode, home appliance 50 performs normal operations, such as a cooling operation based on the temperatures of the storage compartments, such as a refrigerator compartment and a freezer compartment, and a defrosting operation using a defrost heater. On the other hand, in the communication connection mode, home appliance 50 is connected to the access point through the simple connection or the detailed connection.

Next, home appliance 50 determines whether the simple connection or the detailed connection is performed as the connection method to the access point (S62). If the user who has checked UI 220 shown in FIG. 12 presses a "Refrigerate" button on the operation panel, home appliance 50 determines that the simple connection is performed and the process proceeds to step S63. On the other hand, if the user who has checked UI 240 shown in FIG. 14 presses the "Partial" button on the operation panel, home appliance 50 determines that the detailed connection is performed and the process proceeds to step S68.

The functions indicated by the buttons on the operation panel of home appliance 50 are applied when home appliance 50 is operating in the normal operation mode, and are not applied when home appliance 50 is operating in the communication connection mode. For example, the "Refrigerate" button is used as a button for regulating the temperature of the refrigerator compartment in the normal operation mode. The "Refrigerate" button is however not used as the button for regulating the temperature of the refrigerator compartment in the communication connection mode. In the communication connection mode, "Refrigerate button" is used as a button for the user to input an instruction to connect home appliance 50 to the access point to home appliance 50. Like the "Refrigerate" button, the "Partial" button is used as a button for the user to input an instruction to connect home appliance 50 to the access point to home appliance 50 in the communication connection mode. Using the buttons for the use in the normal operation mode, for example, a button, such as the "Refrigerate" button, for regulating the temperature of the storage in the communication connection mode as well, there is no need to newly add buttons for the communication connection mode. Even if buttons are newly added for the operations in the communication connection mode, a smaller number of buttons suffice. Note that not the button, such as the "Refrigerate" button, for regulating the temperature of the storage, but a button, such as a "Quick icing" button, related to an ice making function may be used as a button for the user to input an instruction to connect home appliance 50 to the access point to home appliance 50.

Now, the simple connection will be described. Home appliance 50 executes the connection process in the simple connection (S63). Home appliance 50 executes a search process for each mode, such as "WPS", "AOSS", or "Easy start" (Wireless easy start), in time division or in parallel. When finding an access point operating in any of the "WPS", "AOSS", or "Easy start" mode at the same time, home appliance 50 establishes communication connection with the found access point.

Next, home appliance 50 determines whether the connection to the access point is successful (S64). When communication connection with the access point is established in the connection process in step S63, home appliance 50 determines that the connection to the access point is successful (Yes in S64) and the process proceeds to step S65. On the other hand, assume that communication connection with the access point is not established even in a predetermined time (e.g., two minutes) after the start of the connection process in step S63. In this case, home appliance 50 determines that the connection to the access point is unsuccessful (No in S64) and the process proceeds to step S67.

Home appliance 50 then notifies the user of the connection to the access point (S65). By turning an LED (i.e., an illumination device) on the door of the refrigerator compartment of home appliance 50 to a predetermined color (e.g., blue), home appliance 50 notifies the user of the connection to the access point. Note that how to notify the user of the connection to the access point is not necessarily the turning-on of the illumination device, such as the LED, home appliance 50 may output an audio message notifying the user of the connection to the access point. Home appliance 50 may instruct a predetermined smart speaker to output an audio message notifying the user of the connection to the access point so that the smart speaker outputs the audio message.

After that, home appliance 50 determines whether to be back to the normal operation mode from the communication connection mode (S66). In a predetermined time (e.g., one minute) after executing the process in step S65, home appliance 50 determines to be back to the normal operation mode from the communication connection mode (Yes in S66) and the process proceeds to step S67. On the other hand, determining not to be back to the normal operation mode from the communication connection mode (No in S66) until a lapse of the predetermined time after executing the process in step S65, home appliance 50 keeps notifying the user and the process returns to step S66.

Next, home appliance 50 is back to the normal operation mode from communication connection mode (S67). In the case where the connection to the access point is determined to be unsuccessful in step S64, the process proceeds to step S67 and home appliance 50 is back to the normal operation mode from communication connection mode.

Now, the detailed connection will be described. Home appliance 50 starts the operation in the SoftAP mode (S68). The SSID of home appliance 50 operating in the SoftAP mode and the password for the external device to access home appliance 50 operating in the SoftAP mode are determined in advance at the time of manufacturing home appliance 50. These SSID and password are identical with those incorporated into the application program in advance. An operation is also possible which requires no password for an external device to access home appliance 50 operating in the SoftAP mode. In the case of this operation, only the SSID of home appliance 50 may be incorporated into the application program in advance.

Next, home appliance 50 determines whether a request for connection to home appliance 50 operating in the SoftAP mode has been received from an external device (S71). In this embodiment, information terminal 10 transmits a request for connection to home appliance 50 operating in the SoftAP mode (see step S45 in FIG. 8). If home appliance 50 receives the request for connection (Yes in S71), the process proceeds to step S72. On the other hand, if there is no request for connection to home appliance 50 operating in the SoftAP mode in a predetermined time (e.g., two minutes) after the start of the operation in the SoftAP mode (No in S71), the process proceeds to step S78.

Home appliance 50 then establishes communication connection with an external device which is the source of the request for connection (S72). In this embodiment, communication connection is established between home appliance 50 and information terminal 10.

After that, home appliance 50 determines whether the SSID of the access point and the password for accessing the access point have been received from the external device connected to home appliance 50 (S73). In this embodiment, information terminal 10 transmits the SSID of router 61 and the password for accessing router 61 to home appliance 50 (see step S53 in FIG. 9). If home appliance 50 receives the SSID of the access point and the password for accessing the access point from the external device (Yes in S73), the process proceeds to step S74. On the other hand, if home appliance 50 receives neither the SSID of the access point nor the password for accessing the access point in a predetermined time (e.g., two minutes) after the establishment of the communication connection between home appliance 50 and the external device (No in S73), the process proceeds to step S78.

Next, home appliance 50 accesses the access point based on the SSID and password received from the external device (S74). In this embodiment, home appliance 50 establishes communication connection with the access point.

Home appliance 50 then determines whether the connection to the access point is successful (S75). If home appliance 50 determines that the connection to the access point is successful (Yes in S75), the process proceeds to step S76. On the other hand, if home appliance 50 determines that the connection to the access point is unsuccessful (No in S75), the process proceeds to step S78.

After that, home appliance 50 notifies the user of the connection to the access point (S76). The process in step S76 is the same as the process described in step S65 with reference to FIG. 18. Unlike in step S65, in step S76, home appliance 50 establishes communication connection not only with router 61 but also with information terminal 10. Home appliance 50 may notify information terminal 10 of the connection to the access point and notified information terminal 10 may cause display 15 to display that home appliance 50 has been connected to the access point.

Next, home appliance 50 determines whether the mode is back to the normal operation mode from the communication connection mode (S77). In a predetermined time (e.g., one minute) after executing the process in step S76 or the communication connection between home appliance 50 and information terminal 10 is cut off, home appliance 50 determines to be back to the normal operation mode from the communication connection mode (Yes in S77), the process proceeds to step S78. On the other hand, determining not to be back to the normal operation mode from the communication connection mode (No in S77) until a lapse of the predetermined time after executing the process in step S76, home appliance 50 keeps notifying the user and the process returns to step S77.

Home appliance 50 then is back to the normal operation mode from the communication connection mode (S78). In step S78, home appliance 50 ends the operation in the SoftAP mode. Even if no request for connection is determined to be received from an external device in step S71, the process proceeds to step S78 and home appliance 50 is back to the normal operation mode from the communication connection mode. Even if the SSID and the password are determined not to be received in step S73, the process proceeds to step S78 and home appliance 50 is back to the normal operation mode from the communication connection mode. Even if the connection to the access point is determined to be unsuccessful in step S75, the process proceeds to step S78 and home appliance 50 is back to the normal operation mode from the communication connection mode.

As described above, in the process of the detailed connection, information terminal 10 transmits the SSID of router 61 and the password for accessing router 61 to home appliance 50. Home appliance 50 then establishes communication connection with router 61 based on the received SSID and password. Accordingly, even if the user does not designate, at home appliance 50, router 61 that is the designation of home appliance 50, communication connection can be established between home appliance 50 and router 61.

In the process described above, information terminal 10 and home appliance 50 store the SSID and the password that are the credentials set when home appliance 50 establishes communication connection with network 60. Accordingly, information terminal 10 can generate the reading code using the credentials stored in information terminal 10 and the credentials stored in home appliance 50.

### [3. Specific Example of Registration Process]

The registration process of system 1 described with reference to FIG. 3 may be performed as illustrated in FIGS. 20 to 23.

FIGS. 20 to 23 are sequence diagrams showing a specific example registration process in the system according to the embodiment. Note that the sequence diagram in FIG. 21 follows the sequence diagram in FIG. 20. The sequence diagram in FIG. 22 follows the sequence diagram in FIG. 21. The sequence diagram in FIG. 23 follows the sequence diagram in FIG. 22.

Information terminal 10 receives a start-up operation of an application (S101).

Step S101 executes the application, and information terminal 10 displays a home screen of an application (S102).

Information terminal 10 receives an input for logging in system 1 (S103). Specifically, information terminal 10 receives the user information (i.e., the user ID) and the password.

Information terminal 10 transmits the received user ID and password to server 20 (S104).

When receiving the user ID and the password from information terminal 10, server 20 executes the process of logging in system 1, based on the received user ID and password (S105).

When executing the log-in process, server 20 transmits a single sign on (SSO) token to information terminal 10 (S106).

When receiving the SSO token, information terminal 10 displays a UI for receiving an input for starting the settings of camera device 40, and receives the input for starting the settings (S107).

When receiving an input for starting the settings, information terminal 10 displays a license screen (S108). The license screen is for receiving an input indicating as to whether to agree with the license from the user.

When receiving an input indicating the agreement on the license screen (S109), information terminal 10 requests an access token (S110). The request for a token may include the user ID. The access token is an example of the authentication key.

When receiving a request for a token, server 20 extracts the user ID included in the request for a token (S111). Alternatively, server 20 may extract the user ID from the information stored in server 20 based on the request for a token.

When extracting the user ID, server 20 generates the access token (S112), and stores the generated access token and the user ID in association with each other (S113).

Server 20 transmits the generated access token to information terminal 10 (S114).

When receiving the access token from server 20, information terminal 10 generates credentials (i.e., the SSID and the password) for communication connection to network 60 and a QR code including the access token (S115). The QR code is an example of the reading code.

Next, information terminal 10 displays a screen for encouraging the user to turn on camera device 40 (S116).

When receiving the operation of turning on, camera device 40 is turned on (S117).

Camera device 40 then determines whether the Wi-Fi has been set already (i.e., whether the settings of communication connection are complete)(S118).

If the Wi-Fi has been set already (Yes in S118), camera device 40 turns the LED of camera device 40 green (S119).

After that, camera device 40 starts up in the normal mode (S120).

Next, camera device 40 may receive the pressing of a "Wi-Fi settings" button (S121). In this case, camera device 40 may reset the Wi-Fi.

If the Wi-Fi has not been set yet (No in S118) or the "Wi-Fi settings" button is pressed, camera device 40 causes the LED of camera device 40 to blink in green (S122) and shifts to stand by for the QR code authentication (S123).

After step S116, if the LED of camera device 40 does not blink, information terminal 10 displays a screen for encouraging the user to press the "Wi-Fi settings" button of camera device 40 (S124).

After step S124, information terminal 10 displays a QR code (S125).

Assume that camera device 40 detects the QR code displayed on information terminal 10 in a plurality of captured images, while standing by for the QR code authentication (S126). In this case, camera device 40 determines whether the QR code could be detected in all the plurality of images (S127).

If camera device 40 could detect the QR code in all the plurality of images (Yes in S127), the process proceeds to next step S128. If not (No in S127), the process returns to step S126. Alternatively, if the detected QR code could not be decoded (No in S127), the process returns to step S126.

Camera device 40 decodes the QR code to obtain the SSID, the password, and the access token (S128).

After step S128, camera device 40 causes the buzzer to sound once (S129).

Camera device 40 causes the LED of camera device 40 to blink in blue (S130).

Camera device 40 establishes Wi-Fi connection using the SSID and password obtained by decoding (S131).

Camera device 40 stores the SSID and password in a local area (S132) and turns the LED of camera device 40 blue (S133).

After step S133, camera device 40 transmits a request for device registration to server 30 (S134). The request for device registration includes the camera information.

When receiving the request for device registration, server 30 transmits response information to camera device 40 (S135).

When receiving the response information, camera device 40 transmits the camera information and an access token to server 20 (S136).

When receiving the camera information and the access token from camera device 40, server 20 compares the received access token to the access token already issued by server 20 (S137).

After step S136, camera device 40 turns the LED of camera device 40 green (S138) and causes the buzzer to sound twice (S139).

After step S125, information terminal 10 transmits a request for camera information and the model number to server 20 (S141). The request includes an SSO token and an access token.

When receiving the request for the camera information and the model number from information terminal 10, server 20 obtains the data (i.e., the camera information and the model number) using, as a key, the access token included in the request (S142).

Server 20 transmits the obtained camera information and model number to information terminal 10 (S143).

Note that information terminal 10 monitors a timeout after step S125 (S140). For example, information terminal 10 repeats the process in step S141 until the lapse of a predetermined time (e.g., three minutes) after starting the count at the end of step S125. Information terminal 10 determines whether the camera information and the model number transmitted from server 20 in step S143 are available. If neither the camera information nor the model number is unavailable until the lapse of the predetermined time, information terminal 10 may return to step S125 to repeat the process in step S125 and the subsequent steps again, or may cancel and end the registration process. The process is not limited to that described above. Receiving neither the camera information nor the model number in the predetermined time, information terminal 10 displays a UI for causing the user to select one out of the following options. One option is to return the process to step S125 to repeat the process in step S125 and the subsequent steps again, and the other is to cancel and end the registration process. Information terminal 10 may then execute the process according to the input received at the UI.

After step S143, information terminal 10 transmits a request for the status of the device registration to server 20 (S144).

When receiving the request for the status of the device registration from information terminal 10, server 20 transmits the request for the status of the device registration to server 30 (S145).

When receiving the request for the status of the device registration from server 20, server 30 transmits a notification of completion of the device registration to server 20 (S146).

When receiving the notification of completion of the device registration from server 30, server 20 transmits the notification of completion of the device registration to information terminal 10 (S147).

Information terminal 10 receives an input by the user (S148). The input received here is the information, such as the date of purchase of camera device 40, or the user's nickname.

Information terminal 10 transmits an instruction on the device registration including the information input in step S148 to server 20 (S149). The instruction on the device registration includes the hashed camera information, the model number of camera device 40, and the device ID for communications.

When receiving the input information from information terminal 10, server 20 transmits the request for device registration to server 30 (S150). The request for device registration includes the encoded user ID and the device ID for communications.

When receiving the request for device registration from server 20, server 30 performs registration matching by comparing the request for device registration to the request for the status of the device registration received in step S145 (S151).

When the data matches in the registration matching, server 30 stores the user ID and the camera information in association with each other (S152).

After step S150, server 20 performs a process for home appliance registration of storing the model number and the device ID for communications in association with each other (S153).

After step S153, server 20 transmits the notification of completion of the device registration to information terminal 10 (S154).

Server 20 deletes the association between the access token and the user ID (S155).

### [4. Advantages]

System 1 according to this embodiment includes server 20, information terminal 10 communicably connected to server 20 via network 60, and camera device 40 having a communication function. Information terminal 10 includes: terminal obtainer 11 that receives an authentication key from server 20; generator 13 that generates an optical reading code representing the authentication key; display 15 that displays the reading code generated, terminal storage 14 that stores user information for identifying a user; and terminal transmitter 12 that transmits the user information to server 20. Camera device 40 includes: image sensor 41; decoder 42 that decodes the authentication key represented by the reading code, based on an image obtained by capturing the reading code displayed on information terminal 10 using image sensor 41; camera storage 43 that stores camera information for identifying camera device 40; and camera communicator 44 transmits, to server 20, the authentication key and the camera information stored in camera storage 43. Server 20 stores, in association with each other, the user information transmitted by information terminal 10 and the camera information transmitted together with the authentication key by camera device 40.

With this configuration, information terminal 10 displays the reading code representing the authentication key obtained from server 20, and causes camera device 40 to read the reading code. Camera device 40 then transmits the camera information together with the authentication key obtained by decoding the reading code to server 20. Accordingly, the camera information about the camera device, which is to be registered at the server by the user using the information terminal, can be transmitted to the server. That is, unless accessing server 20 using information terminal 10, the reading code to be read by camera device 40 is unavailable. This can reduce reading of a fake reading code and transmission of the camera information about camera device 40 by camera device 40. In this manner, server 20 can obtain reliable camera information from camera device 40, and can thus store the user information and the reliable camera information in association with each other.

In system 1 according to this embodiment, when the authentication key received together with the camera information from camera device 40 has been transmitted already, server 20 determines that the camera information is reliable, and stores the user information received and the camera information determined to be reliable in association with each other.

Accordingly, server 20 can associate the user information and the camera information determined to be reliable.

In system 1 according to this embodiment, when receiving the camera information from camera device 40, server 20 transmits the camera information received to information terminal 10. When transmitting the user information to server 20, terminal transmitter 12 transmits, together with the user information to server 20, the camera information received from server 20. When the camera information received together with the user information from information terminal 10 has been transmitted already, server 20 determines that the user information is reliable, and stores the user information determined to be reliable and the camera information in association with each other.

Accordingly, server 20 can associate the user information determined to be reliable and the camera information determined to be reliable.

In system 1 according to this embodiment, terminal obtainer 11 further obtains credentials for accessing network 60. Generator 13 generates a reading code representing the authentication key and the credentials. Decoder 42 decodes the authentication key and the credentials represented by the optical reading code. Camera communicator 44 establishes the communication with network 60 using the credentials, and transmits the authentication key and the camera information to server 20 after establishing the communication.

Accordingly, camera device 40 can easily establish communications with network 60.

System 1 according to this embodiment further includes home appliance 50 communicably connected to network 60 using the credentials. Home appliance 50 stores credentials. Terminal obtainer 11 obtains the credentials from home appliance 50 via network 60.

With this configuration, camera device 40 establishes communications with network 60 using the credentials stored in home appliance 50 connected to network 60 already. That is, camera device 40 can easily establish the communications with network 60.

System 1 according to this embodiment further includes home appliance 50 communicably connected to network 60 using the credentials. Terminal storage 14 stores the credentials used in setting the communication connection of home appliance 50. Terminal obtainer 11 obtains the credentials from terminal storage 14.

With this configuration, camera device 40 establishes communications with network 60 using the credentials used in setting the communication connection of home appliance 50. That is, camera device 40 can easily establish the communications with network 60.

In system 1 according to this embodiment, information terminal 10 further includes receiver 16 that receives an input by a user. Terminal obtainer 11 obtains the credentials generated based on the input received by receiver 16.

With this configuration, camera device 40 establish communications with network 60 using the credentials generated based on the input by the user. The user can thus cause camera device 40 to establish communications using desired credentials.

In system 1 according to this embodiment, the authentication key is invalidated after a first period elapses from when the authentication key is transmitted by server 20.

This can reduce the abuse of the authentication key by a third party to cause server 20 to store the camera information and the user information in association with each other.

In system 1 according to this embodiment, the reading code is invalidated after a second period elapses from when the optical reading code is generated by generator 13.

This can reduce the abuse of the reading code by a third party to cause server 20 to store the camera information and the user information in association with each other.

Information terminal 10 according to this embodiment is included in system 1. Information terminal 10 includes: terminal obtainer 11 that obtains, from server 20, an authentication key to cause server 20 to verify that information received together with the authentication key is reliable; generator 13 that generates an optical reading code representing the authentication key; display 15 that displays the reading code generated by generator 13 to cause camera device 40 to read the reading code; terminal storage 14 that stores user information for identifying a user; and terminal transmitter 12 that transmits the user information to server 20.

With this configuration, information terminal 10 displays the reading code representing the authentication key obtained from server 20, and causes camera device 40 to read the reading code. For example, it can be used by camera device 40 to transmit the camera information together with the authentication key obtained by decoding the reading code to server 20. Unless accessing server 20 using information terminal 10, the reading code to be read by camera device 40 is unavailable. This can reduce reading of a fake reading code and transmission of the camera information about camera device 40 by camera device 40.

### [5. Others]

In the embodiment described above, the elements may be achieved by dedicated hardware or by a program executor, such as a CPU or a processor, reading out and executing software programs stored in a recording medium, such as a hard disk or a semiconductor memory. Here, the software for achieving the system, the information terminal, the server, the camera device, and other elements described above in the embodiment is a program for causing a computer to execute the steps included in the flowcharts shown in the drawings.

Note that the present disclosure includes the following cases.
(1) Specifically, the devices described above are each a computer system including a microprocessor, a ROM, a random-access memory (RAM), a hard disk unit, a display unit, a keyboard, a mouse, or other elements. The RAM or the hard disk unit stores computer programs. The microprocessor operates in accordance with the computer programs so that the devices fulfil their functions. Here, the computer programs are each configured by combining a plurality of instruction codes indicating commands to the computer to fulfill the predetermined functions.
(2) Some or all of the elements of the devices may serve as a single system large-scale integrated (LSI) circuit. The system LSI circuit is a super multifunctional LSI circuit manufactured by integrating a plurality of components on one chip, and specifically is a computer system including a microprocessor, a ROM, and a RAM, for example. The RAM stores computer programs. The microprocessor operates in accordance with the computer programs so that the system LSI circuit fulfills its functions.
(3) A part or all of the elements of the above-described devices may be configured as an IC card which can be attached to and detached from the respective devices or as a single module. The IC card or the module is a computer system including a microprocessor, a ROM, and a RAM, for example. The IC card or the module may include the super-multifunctional LSI circuit. The microprocessor operates in accordance with the computer program so that the IC card or the module fulfills its function. The IC card or the module may be tamper-resistant.
(4) The present disclosure may be directed to the method described above. The present disclosure may also be directed to a computer program for executing the method described above using a computer, or may be a digital signal generated by the computer program.

The present disclosure may also be directed to a computer-readable recording medium, such as a flexible disk, a hard disk, a CD-ROM, a magneto optical disk (MO), a DVD, a DVD-ROM, a DVD-RAM, a Blu-ray (registered trademark) disc (BD), a semiconductor memory, or any other suitable means, having recorded thereon the computer program or the digital signal. The present disclosure may be directed to the digital signal recorded on the recording medium.

The present disclosure may be implemented by transmitting the computer program or the digital signal via, for example, an electric communication line, a wireless or wired communication line, a network such as the Internet, or data broadcasting.

The present disclosure may be directed to a computer system including a microprocessor and a memory. The memory stores computer programs and the microprocessor operates in accordance with the computer programs.

The present disclosure may be implemented by another independent computer system by transmitting the program or the digital signal recorded on the recording medium, or by transmitting the program or the digital signal via the network or any other suitable means.

### [Industrial Applicability]

The present disclosure is useful as a system capable of storing user information and reliable camera information in association with each other.

### [Reference Signs List]

- 1: system
- 10: information terminal
- 11: terminal obtainer
- 12: terminal transmitter
- 13: generator
- 14: terminal storage
- 15: display
- 16: receiver
- 20, 30: server
- 21, 31: communicator
- 22, 32: storage
- 23, 33: controller
- 40: camera device
- 41: image sensor
- 42: decoder
- 43: camera storage
- 44: camera communicator
- 50: home appliance
- 60: network
- 61: router

## Claims

1. A system in which a camera device having a communication function communicates via a network with a server communicably connectable to an information terminal, wherein
the information terminal includes:
a terminal obtainer that receives an authentication key from the server;
a generator that generates an optical reading code representing the authentication key;
a display that displays the optical reading code generated;
a terminal storage that stores user information for identifying a user; and
a terminal transmitter that transmits the user information to the server,
the camera device includes:
a decoder that decodes the authentication key represented by the optical reading code, based on an image obtained by capturing the optical reading code displayed on the information terminal using an image sensor included in the camera device;
a camera storage that stores camera information for identifying the camera device; and
a camera communicator that transmits, to the server, the authentication key and the camera information stored in the camera storage, and
the server stores, in association with each other: the user information transmitted by the information terminal; and the camera information transmitted together with the authentication key by the camera device.

2. The system according to claim 1, wherein
when the authentication key received together with the camera information from the camera device has been transmitted already, the server determines that the camera information is reliable, and stores the user information received and the camera information determined to be reliable in association with each other.

3. The system according to claim 1 or 2, wherein
when receiving the camera information from the camera device, the server transmits the camera information received to the information terminal,
when transmitting the user information to the server, the terminal transmitter transmits, together with the user information to the server, the camera information received from the server, and
when the camera information received together with the user information from the information terminal has been transmitted already, the server determines that the user information is reliable, and stores the user information determined to be reliable and the camera information in association with each other.

4. The system according to claim 1 or 2, wherein
the terminal obtainer further obtains credentials for accessing the network,
the generator generates the optical reading code representing the authentication key and the credentials,
the decoder decodes the authentication key and the credentials represented by the optical reading code, and
the camera communicator establishes communication with the network using the credentials, and transmits the authentication key and the camera information to the server after establishing the communication.

5. The system according to claim 4, wherein
the terminal obtainer obtains the credentials via the network from a home appliance that stores the credentials and is communicably connected to the network using the credentials.

6. The system according to claim 4, wherein
the terminal storage stores the credentials used for setting communication connection of the home appliance communicably connected to the network using the credentials, and
the terminal obtainer obtains the credentials from the terminal storage.

7. The system according to claim 4, wherein
the information terminal further includes a receiver that receives an input by a user, and
the terminal obtainer obtains the credentials generated based on the input received by the receiver.

8. The system according to claim 1 or 2, wherein
the authentication key is invalidated after a first period elapses from when the authentication key is transmitted by the server.

9. The system according to claim 1 or 2, wherein
the optical reading code is invalidated after a second period elapses from when the optical reading code is generated by the generator.

10. An information terminal communicably connected via a network to a server communicably connectable to a camera device having a communication function, the information terminal comprising:
a terminal obtainer that obtains, from the server, an authentication key for causing the server to verify that information received together with the authentication key is reliable;
a generator that generates an optical reading code representing the authentication key;
a display that displays the optical reading code generated by the generator so as to be read by the camera device;
a terminal storage that stores user information for identifying a user; and
a terminal transmitter that transmits the user information to the server.

11. A communication setting method by which a camera device having a communication function communicates via a network with a server communicably connectable to an information terminal, the communication setting method comprising:
obtaining, by the information terminal, an authentication key from the server;
generating, by the information terminal, an optical reading code representing the authentication key;
displaying, by the information terminal, the optical reading code generated;
transmitting, by the information terminal, user information for identifying a user to the server;
capturing, by the camera device, the optical reading code displayed on the information terminal;
decoding, by the camera device, the authentication key represented by the optical reading code based on an image obtained by the capturing;
transmitting, by the camera device, the authentication key and camera information for identifying the camera device to the server; and
storing, by the server in association with each other, the user information transmitted by the information terminal and the camera information transmitted together with the authentication key by the camera device.
